# EUROPEAN PATENT APPLICATION

(11) **EP 3 438 943 A1**
(43) Date of publication of application: **06.02.2019**
(21) Application number: 18186521.3
(22) Date of filing: 31.07.2018
(51) Int. Cl.: G08B 13/196, H04N 5/232, H04N 5/262, H04N 5/272, H04N 21/454, H04N 21/4545

(54) **INFORMATION PROCESSING APPARATUS, INFORMATION PROCESSING METHOD, AND COMPUTER PROGRAM**

(30) Priority: 02.08.2017 JP 2017150045; 18.06.2018 JP 2018115525
(71) Applicant: CANON KABUSHIKI KAISHA, Ohta-ku Tokyo 146-8501 (JP)
(72) Inventor: TAKAMI, Shinjiro, Ohta-ku, Tokyo 146-8501 (JP)
(74) Representative: Naidu, Deepal Swamy

(57) **Abstract**

An information processing apparatus includes a display unit, a transmission unit configured to transmit, to an imaging apparatus, a mask setting command including mask setting information indicating a position of a mask selected to prevent at least a part of a region in a captured image, captured by the imaging apparatus, from being viewed, a reception unit configured to receive an image containing said mask, in which the position of the mask is specified, generated based on the mask setting information, and a display control unit configured to display the image containing said mask received by the reception unit on the display unit.

## Description

### BACKGROUND OF THE INVENTION

### Field of the Invention

The present invention relates to an information processing apparatus, an information processing method, and a computer program.

### Description of the Related Art

As discussed in Japanese Patent Application Laid-Open No. 2018-7150, a known monitoring camera provides a masking function to prevent at least a part of an image from being viewed in order to protect privacy, in which a user can set a mask at an optional position in the image.

In a case where pan-tilt-zoom control is performed after the mask is set in the monitoring camera using a pan-tilt-zoom control mechanism, the set mask does not necessarily remain located within the image. Thus, when the user attempts to check the position of the set mask by viewing the image, it is necessary for the user to perform pan-tilt-zoom control to the position where the mask is set to check the position of the mask.

This increases labor of the user.

### SUMMARY OF THE INVENTION

According to a first aspect of the present invention, there is provided an information processing apparatus as specified in claims 1 to 5. According to a second aspect of the present invention, there is provided an information processing method as specified in claim 6. According to a third aspect of the present invention, there is provided a computer program as specified in claim 7.

Further features of the present invention will become apparent from the following description of exemplary embodiments with reference to the attached drawings.

### BRIEF DESCRIPTION OF THE DRAWINGS

Fig. 1 is a diagram illustrating an example of a configuration of a system including a monitoring camera.
Figs. 2A and 2B are diagrams each illustrating an example of a hardware configuration.
Figs. 3A and 3B are diagrams each illustrating an example of a software configuration.
Fig. 4 is a sequence diagram illustrating an example of information processing in the system.
Fig. 5 is a flowchart illustrating an example of mask-set image generation processing.
Fig. 6 is a flowchart illustrating an example of mask acquisition command processing.
Fig. 7 is a diagram illustrating an example of configuration of a mask setting information storage region and mask setting information.
Fig. 8 is a diagram illustrating a mask setting screen according to a first exemplary embodiment.
Fig. 9 is a diagram illustrating a mask list screen according to the first exemplary embodiment.
Fig. 10 is a flowchart illustrating mask-set image generation processing according to a second exemplary embodiment.
Fig. 11 is a diagram illustrating transition of a captured image in the mask-set image generation processing according to the second exemplary embodiment.
Fig. 12 is a diagram illustrating a mask list screen according to the second exemplary embodiment.
Fig. 13 is a flowchart illustrating mask-set image generation processing according to a third exemplary embodiment.
Fig. 14 is a diagram illustrating transition of a captured image in the mask-set image generation processing according to the third exemplary embodiment.
Fig. 15 is a flowchart illustrating mask-set image generation processing according to a fourth exemplary embodiment.
Fig. 16 is a diagram illustrating transition of a captured image in the mask-set image generation processing according to the fourth exemplary embodiment.
Fig. 17 is a diagram illustrating a mask list screen according to the fourth exemplary embodiment.
Fig. 18 is a diagram illustrating a mask setting screen according to a fifth exemplary embodiment.
Fig. 19 is a flowchart illustrating mask setting command processing according to the fifth exemplary embodiment.

### DESCRIPTION OF THE EMBODIMENTS

Some exemplary embodiments of the present invention are described below with reference to accompanying drawings. Each of the embodiments of the present invention described below can be implemented solely or as a combination of a plurality of the embodiments. Also, features from different embodiments can be combined where necessary or where the combination of elements or features from individual embodiments in a single embodiment is beneficial.

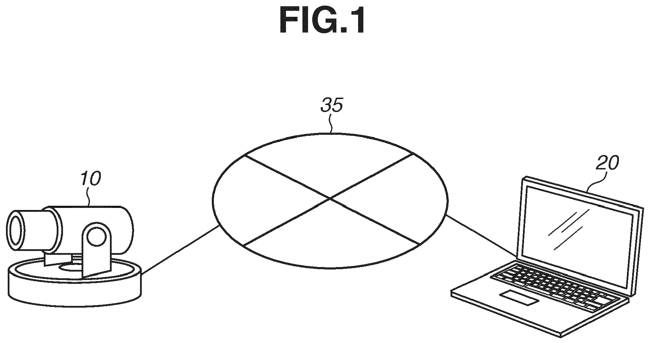

A first exemplary embodiment of the present invention will be described below in detail. Fig. 1 is a diagram illustrating an example of a configuration of a system including a monitoring camera 10. The monitoring camera 10 and a client apparatus 20 are connected in a mutually-communicable state through a network 35. The client apparatus 20 is an external apparatus that transmits, to the monitoring camera 10, control commands, such as a mask setting command and a mask acquisition command. The monitoring camera 10 transmits, to the client apparatus 20, a response to the command.

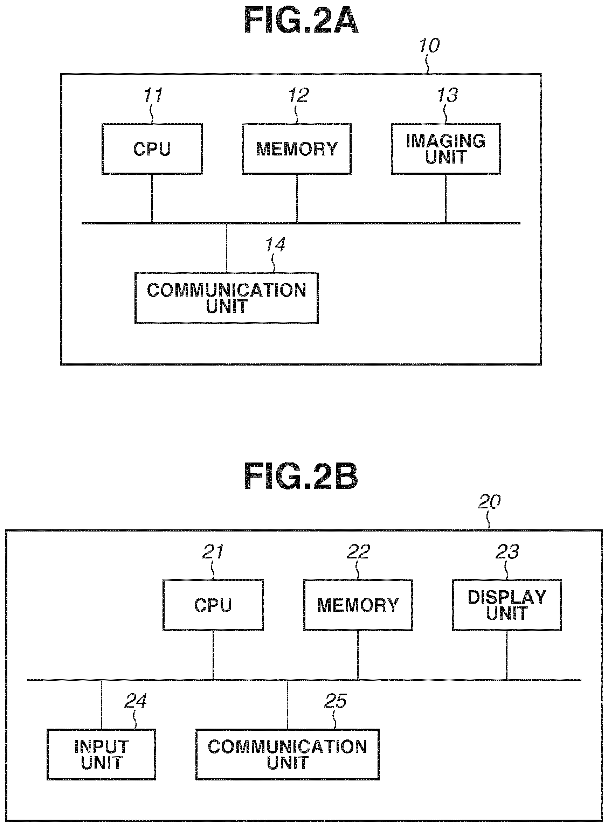

Fig. 2A is a diagram illustrating an example of a hardware configuration of the monitoring camera 10.

A central processing unit (CPU) 11 controls the whole of the monitoring camera 10.

A memory 12 is used as a storage region for various data, such as a storage region of a program mainly executed by the CPU 11, a work area during execution of the program, a storage region of set values such as a mask set value, and a storage region of image data generated by an imaging unit 13 described below.

The imaging unit 13 converts an analog signal that is obtained by imaging an object image formed by an imaging optical system of the monitoring camera 10, into digital data, and outputs the digital data as a captured image to the memory 12. When the captured image is output to the memory 12, the CPU 11 receives an image acquisition event from the imaging unit 13.

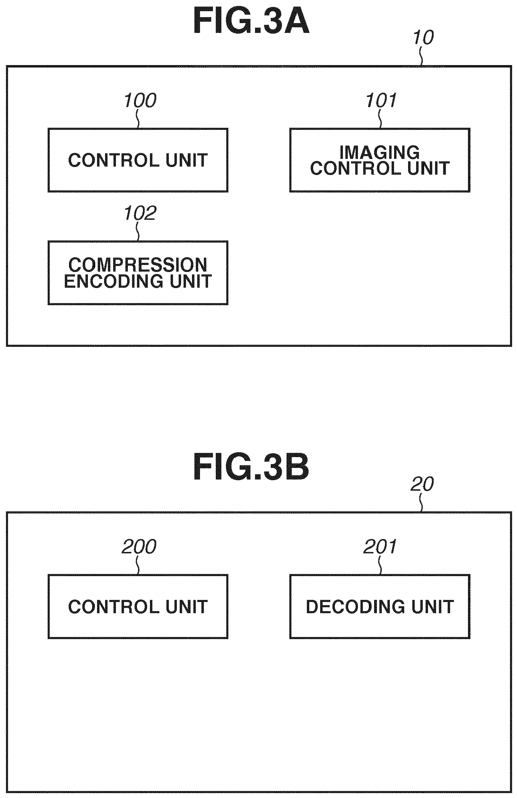

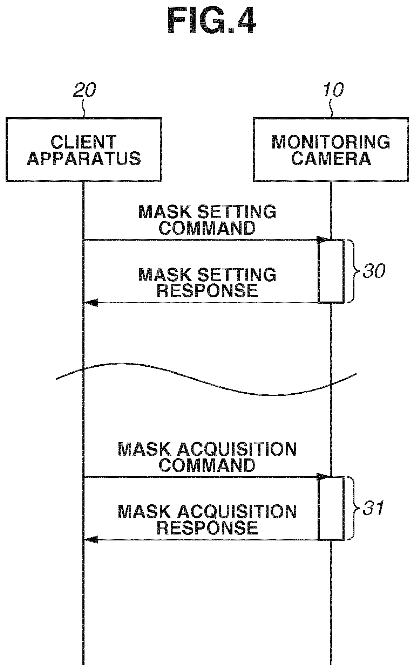

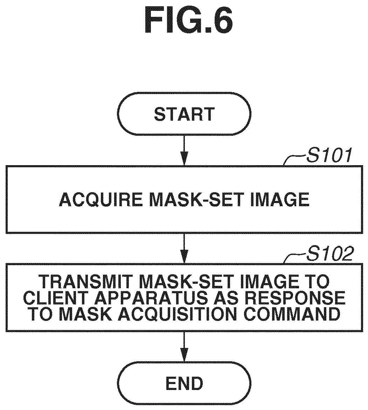

A communication unit 14 is used when the control commands, such as the mask setting command, are received from the external apparatus and when responses to the control commands are transmitted to the external apparatus. When a command is received from the external apparatus, the CPU 11 receives a command reception event from the communication unit 14. By the CPU 11 executing processing based on a program held by the memory 12, a software configuration of Fig. 3A, processing of the monitoring camera 10 in a sequence diagram of Fig. 4, and processing of flowcharts of Fig. 6, Fig. 7, Fig. 11, and Fig. 13 described below are realized.

The hardware configuration of the monitoring camera 10 illustrated in Fig. 2A is illustrative, and the monitoring camera 10 may include, as hardware, an audio input unit, an audio output unit, an image analysis processing unit, in addition to those illustrated in Fig. 2A.

Fig. 2B is a diagram illustrating an example of a hardware configuration of the client apparatus 20.

A CPU 21 controls the whole of the client apparatus 20.

A memory 22 is used as a storage region for various data, such as a storage region of a program mainly executed by the CPU 21, and a work area during execution of the program.

A display unit 23 includes, for example, a liquid crystal display or an organic electroluminescence (EL) display. The display unit 23 presents, to a user of the client apparatus 20, various setting screens including a mask setting screen, various data acquisition/display screen including a mask list screen, a viewer of an image received from the monitoring camera 10, various kinds of messages, etc.

An input unit 24 includes, for example, a button, a cross key, a touch panel, and a mouse, and notifies the CPU 21 of information about an operation performed on a screen by the user.

A communication unit 25 (transmission means) is used when control commands, such as a profile association setting command and a profile acquisition command, are transmitted to the monitoring camera 10, when responses to the control commands or an image stream are received from, for example, the monitoring camera 10.

When the CPU 21 executes processing based on a program held by the memory 22, a software configuration of Fig. 3B and processing of the client apparatus 20 in a sequence diagram of Fig. 4 described below are realized.

Fig. 3A is a diagram illustrating an example of a software configuration of the monitoring camera 10.

A control unit 100 controls processing of the whole of the monitoring camera 10.

An imaging control unit 101 controls the imaging unit 13. For example, the imaging control unit 101 changes an imaging range of the imaging unit 13 to tilt driving, pan driving, or zoom driving, in accordance with a value of panning, tilting, or zooming provided from the control unit 100.

A compression encoding unit 102 performs compression encoding processing on the captured image provided from the imaging unit 13, based on a format of Joint Photographic Experts Group (JPEG), H. 264, or H. 265, thereby generating image data, and outputs the image data to the memory 12.

The imaging control unit 101 may be mounted as a hardware configuration on the monitoring camera 10. Similarly, the compression encoding unit 102 may be mounted as a hardware configuration on the monitoring camera 10.

Fig. 3B is a diagram illustrating an example of a software configuration of the client apparatus 20.

A control unit 200 controls processing of the whole of the client apparatus 20. The control unit 200 is an example of the reception means and the display control means.

A decoding unit 201 decodes the compression-encoded image data that has been received through the communication unit 25, based on a format of JPEG, H. 264, or H. 265, and develops the image data to the memory 22.

The decoding unit 201 may be mounted as a hardware configuration on the client apparatus 20.

Fig. 4 is a sequence diagram of processing relating to the mask setting command and the mask acquisition command of the monitoring camera 10.

The control unit 200 of the client apparatus 20 transmits the mask setting command including one or more pieces of mask setting information. The control unit 100 of the monitoring camera 10 receives the mask setting command, performs mask setting command processing 30, and transmits, as a response, a mask setting response to the client apparatus 20. The control unit 200 of the client apparatus 20 receives the mask setting response. The mask setting information at least indicates a position of a mask for preventing at least a part of a region in the captured image captured by the imaging unit 13 from being viewed.

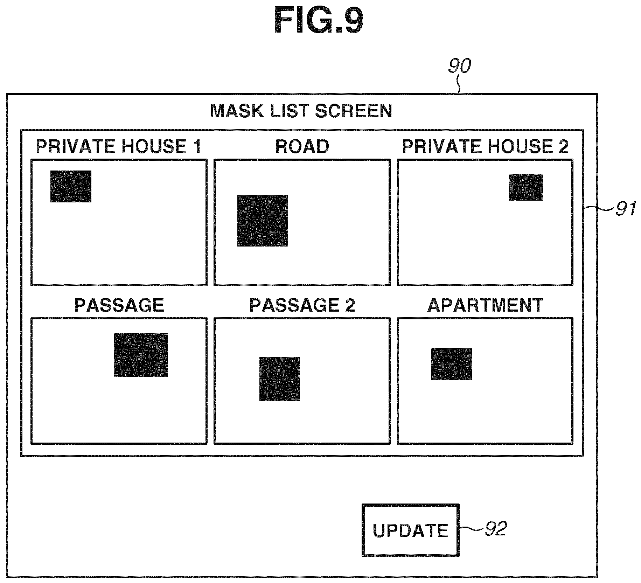

The control unit 200 of the client apparatus 20 transmits the mask acquisition command. More specifically, when the user operates the input unit 24 of the client apparatus 20 to request a mask list screen 90 illustrated in Fig. 9 (described below), the control unit 200 of the client apparatus 20 transmits the mask acquisition command to the monitoring camera 10. The control unit 100 of the monitoring camera 10 receives the mask acquisition command, performs mask acquisition command processing 31, and transmits, as a response, a mask acquisition response to the client apparatus 20. The control unit 200 of the client apparatus 20 receives the mask acquisition response.

In Fig. 4, the mask setting command and the mask acquisition command are transmitted from a single client apparatus 20; however, the commands may be individually transmitted from different client apparatuses 20.

The mask setting command processing 30 and the mask acquisition command processing 31 are examples of the information processing.

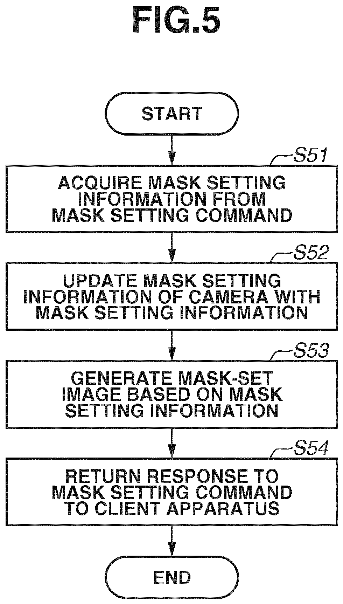

Fig. 5 is a flowchart illustrating an example of the mask setting command processing 30 according to the first exemplary embodiment.

In step S51, the control unit 100 of the monitoring camera 10 acquires mask setting information about a mask 43 from the mask setting command transmitted from the client apparatus 20. The processing then proceeds to step S52. The processing in step S51 is an example of processing of acquiring the mask setting information.

In step S52, the control unit 100 updates the mask setting information held by the memory 12, with the mask setting information about the mask 43 transmitted from the client apparatus 20. The processing then proceeds to step S53.

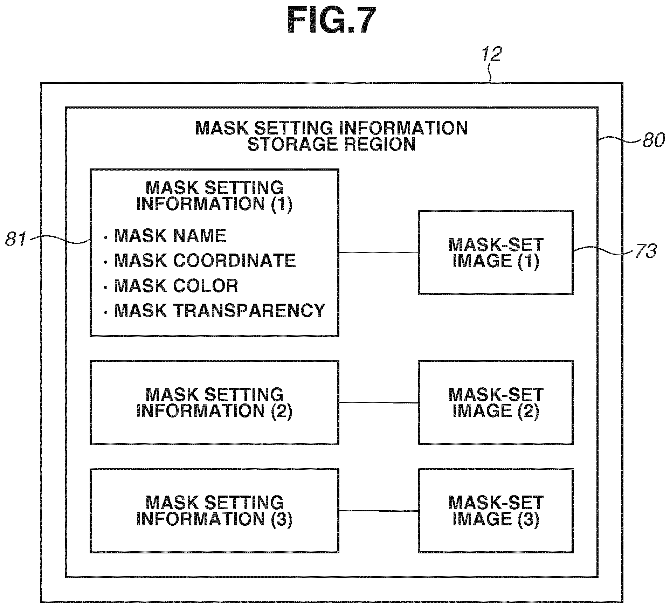

In step S53, the control unit 100 acquires the mask setting information from the memory 12, and generates a mask-set image (an image containing the mask), an image at the time when the mask is set, based on the mask setting information of the mask 43. The processing then proceeds to step S54. A part of the processing in step S53 is an example of the processing of acquiring the mask setting information. As illustrated in Fig. 7, the mask-set image is stored in a mask setting information storage region 80 of the memory 12, in association with the mask setting information. The mask setting information is information for setting a mask name, a mask coordinate (information indicating position of mask within a range capturable by imaging unit 13), a mask color, and mask transparency.

In step S54, the control unit 100 generates a response to the mask setting command, and transmits the response to the mask setting command to the client apparatus 20.

Fig. 6 is a flowchart illustrating an example of the mask acquisition command processing 31 when the monitoring camera 10 receives the mask acquisition command.

In step S101, the control unit 100 acquires a mask-set image 73 from the memory 12. The processing then proceeds to step S102.

In step S102, the control unit 100 generates the mask-set image 73 in response to the mask acquisition command, and transmits the mask-set image 73 to the client apparatus 20. The processing in step S102 is an example of processing of specifying, in accordance with the acquisition command from the client apparatus, the mask-set image held by the memory in association with the mask setting information, and transmitting the specified mask-set image to the client apparatus.

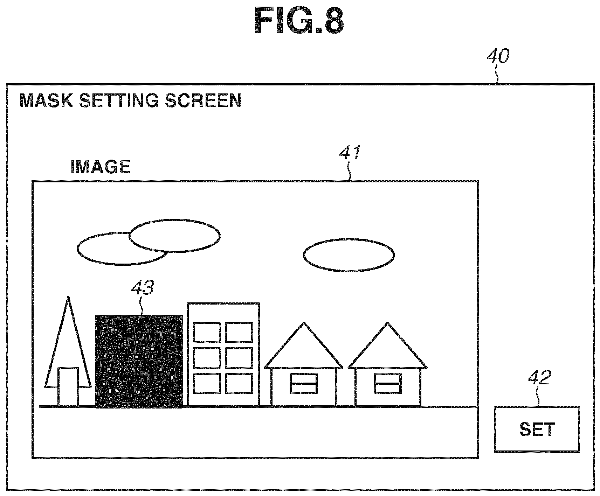

Fig. 8 is a diagram illustrating an example of the mask setting screen according to the first exemplary embodiment. A mask setting screen 40 of Fig. 8 is displayed on the display unit 23 of the client apparatus 20. The user operates the input unit 24 of the client apparatus 20, draws a shape including but not limited to a square shape or a polygonal shape in a mask setting preview screen 41, thereby setting the mask 43. When the user selects a mask setting button 42 after the mask is set, the control unit 200 of the client apparatus 20 transmits the mask setting command to the monitoring camera 10. Data to display the mask setting screen of Fig. 8 may be held by the client apparatus 20, or may be held by the monitoring camera 10 and displayed on a web browser, etc. of the client apparatus 20 in response to a request from the client apparatus 20.

Fig. 9 is a diagram illustrating an example of a mask list screen. A mask list screen 90 of Fig. 9 is displayed on the display unit 23 of the client apparatus 20. When the user operates the input unit 24 of the client apparatus 20 and requests the mask list screen 90, the client apparatus 20 transmits the mask acquisition command to the monitoring camera 10. The client apparatus 20 acquires the mask-set image 73 from the monitoring camera 10 as a response and displays the mask-set image 73 in a mask list display region 91. Further, when the user operates the input unit 24 of the client apparatus 20 to select a mask list update button 92, the client apparatus 20 similarly acquires the mask-set image 73 from the monitoring camera 10, and updates and displays the mask list display region 91.

As described above, the control unit 100 of the monitoring camera 10 generates and saves the mask-set image that allows the user to easily check the position of the mask when the mask setting command is received, and transmits the mask-set image to the user upon reception of the mask acquisition commend.

In this manner, the user can easily check the position of the set mask.

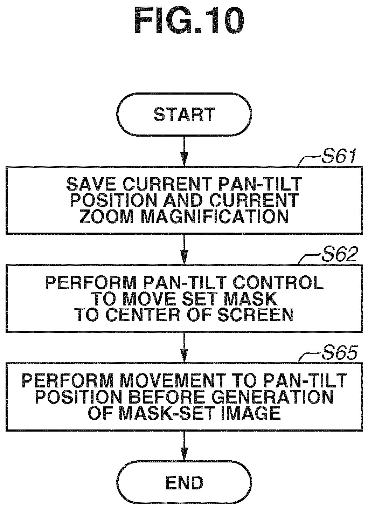

A second exemplary embodiment of the present invention will be described below in detail. The mask-set image generation processing when the monitoring camera 10 receives the mask setting command according to the present exemplary embodiment is described with reference to Figs. 10, 11, and 12.

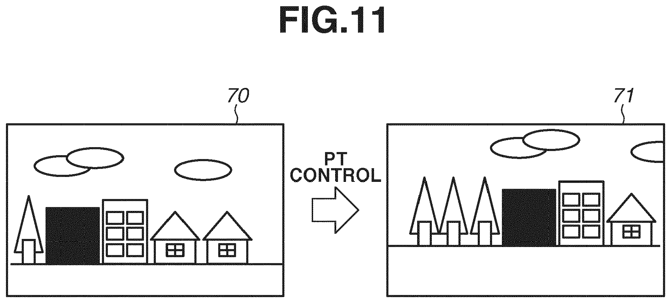

Fig. 10 is a flowchart illustrating an example of the mask-set image generation processing. Fig. 11 is a diagram illustrating an example of transition of the captured image in the mask-set image generation processing. In step S61, the control unit 100 stores a current pan-tilt position and a current zoom magnification in the memory 12. The processing then proceeds to step S62. The captured image at this time is a captured image 70 on which the set mask is superimposed as illustrated in Fig. 11.

In step S62, the control unit 100 requests the imaging control unit 101 to perform pan-tilt control such that the set mask is located at a center of the screen. The imaging control unit 101 performs movement to the requested pan-tilt position. The captured image at this time is a captured image 71 which is obtained by performing pan-tilt control on the captured image 70 and in which the mask is displayed at the center of the screen in Fig. 11. The processing in step S62 is an example of processing of performing the pan-tilt control based on the mask setting information to move the set mask to the center of the screen.

In step S65, the control unit 100 reads the pan-tilt position stored in the memory 12 in step S61, and requests the imaging control unit 101 to perform movement to the pan-tilt position. The imaging control unit 101 performs movement to the requested pan-tilt position.

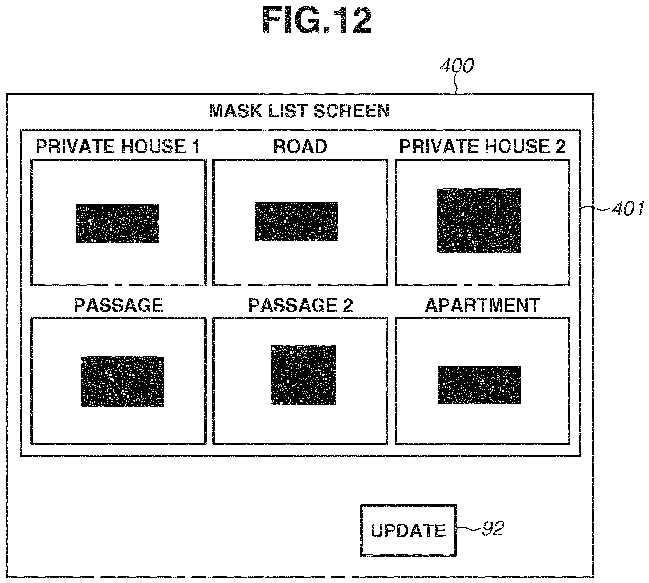

Fig. 12 is a diagram illustrating an example of the mask list screen. A mask list screen 400 of Fig. 12 is displayed on the display unit 23 of the client apparatus 20. When the user operates the input unit 24 of the client apparatus 20 to request the mask list screen 400, the client apparatus 20 transmits the mask acquisition command to the monitoring camera 10. The client apparatus 20 acquires the mask-set image 71 from the monitoring camera 10 as a response, and displays the mask-set image 71 in a mask list display region 401.

As described above, in the present exemplary embodiment, the captured image 71 in which the mask is displayed at the center of the screen is generated and saved as the mask-set image.

In such a manner, the user can easily check the position of the set mask as well as the image around the mask.

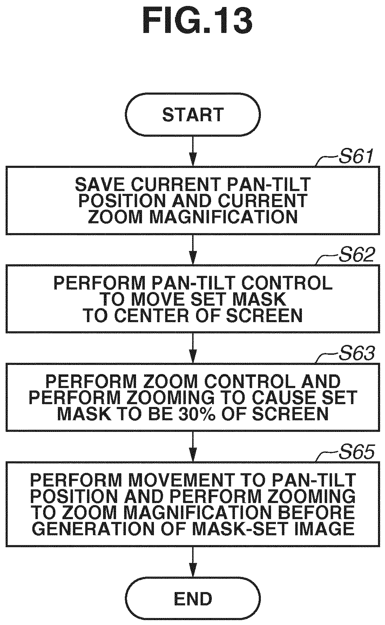

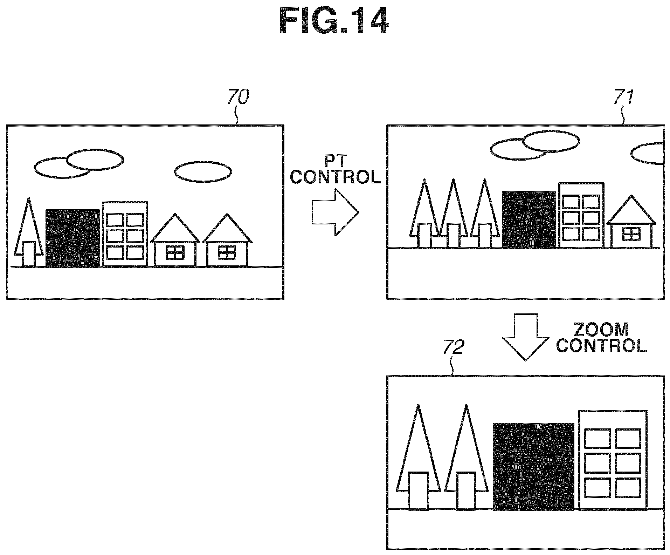

A third exemplary embodiment of the present invention will be described below in detail. The mask-set image generation processing when the monitoring camera 10 receives the mask setting command according to the present exemplary embodiment is described with reference to Fig. 13 and Fig. 14.

Fig. 13 is a flowchart illustrating an example of the mask-set image generation processing. Fig. 14 is a diagram illustrating an example of transition of a captured image in the mask-set image generation processing. Steps S61 and S62 are similar to those in the second exemplary embodiment, and description thereof is omitted. In step S63, the control unit 100 requests the imaging control unit 101 to perform zoom control such that a ratio of the set mask becomes 30% of the screen. The imaging control unit 101 performs zooming to the requested zoom magnification. The captured image at this time is a captured image 72 which is obtained by performing zoom control on the captured image 71 and in which the mask is displayed at a ratio of 30% of the screen, in Fig. 14. The processing in step S63 is an example of processing of further performing the zoom control based on the mask setting information to perform zooming such that the ratio of the set mask becomes the set ratio of the screen. The ratio of 30% is an example of the set ratio.

In step S65, the control unit 100 reads the pan-tilt position and the zoom magnification stored in the memory 12 in step S61, and requests the imaging control unit 101 to perform movement to the pan-tilt position and to perform zooming to the zoom magnification. The imaging control unit 101 performs movement to the requested pan-tilt position and performs zooming to the requested zoom magnification.

In the third exemplary embodiment, the zoom control is performed such that the ratio of the set mask to the screen becomes 30%; however, the ratio of the set mask in the screen is not limited to 30%. For example, the control unit 100 may perform the zoom control such that the ratio of the set mask to the screen becomes 70%.

As described above, according to the third exemplary embodiment, the zoomed captured image 72 in which the mask is displayed at a center of the screen is generated and saved as the mask-set image.

In such a manner, the user can easily check the position of the set mask and also easily check the image around the mask.

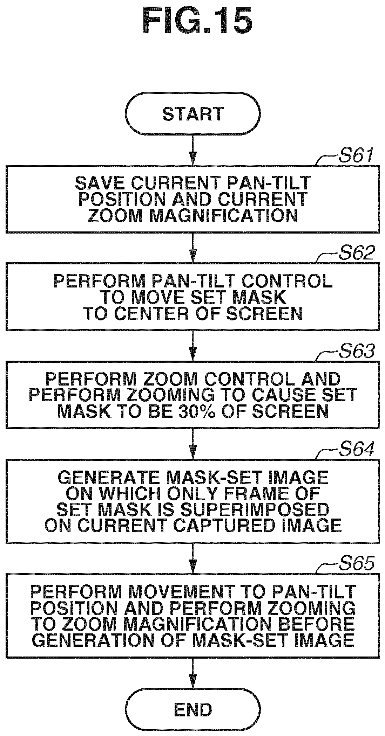

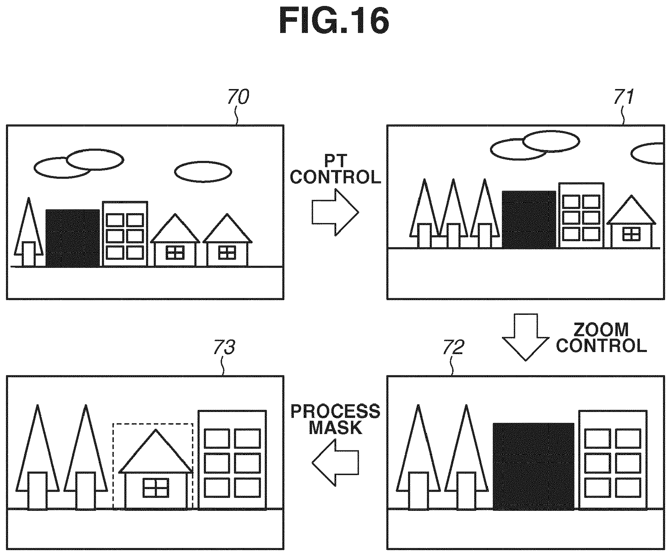

A fourth exemplary embodiment of the present invention will be described below in detail. The mask-set image generation processing when the monitoring camera 10 receives the mask setting command according to the present exemplary embodiment will be described with reference to Fig. 15 and Fig. 16. Fig. 15 is a flowchart illustrating an example of the mask-set image generation processing. Fig. 16 is a diagram illustrating an example of transition of a captured image in the mask-set image generation processing. Steps S61, S62, and S63 are similar to those in the third exemplary embodiment, and description thereof is thus omitted.

In step S64, the control unit 100 requests, through the imaging control unit 101, the imaging unit 13 to generate the mask-set image 73 in which only a frame of the set mask is superimposed on the current captured image as illustrated in Fig. 16. The imaging control unit 101 stores the mask-set image 73 generated by the imaging unit 13 in the memory 12 in association with the mask setting information. The processing then proceeds to step S65. The processing in step S64 is an example of processing of generating the mask-set image in which the frame of the set mask is superimposed on the captured image and storing the generated mask-set image in the memory in association with the mask setting information.

In step S65, the control unit 100 reads the pan-tilt position and the zoom magnification stored in the memory 12 in step S61, and requests the imaging control unit 101 to perform movement to the pan-tilt position and to perform zooming to the zoom magnification. The imaging control unit 101 performs movement to the requested pan-tilt position and performs zooming to the requested zoom magnification.

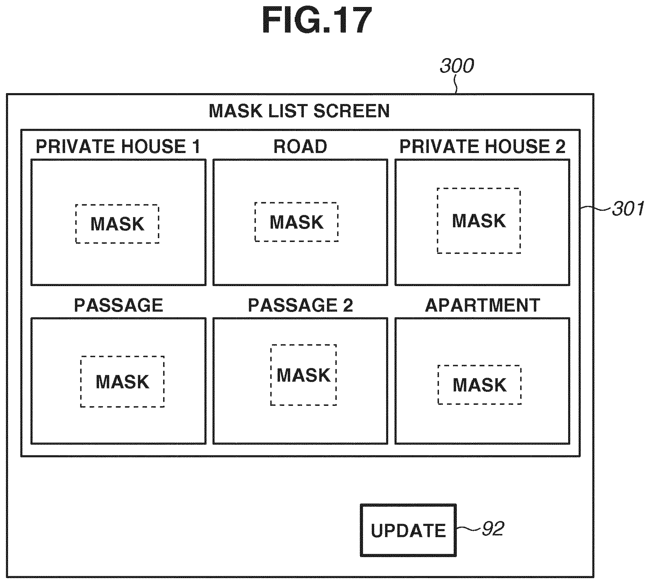

According to the fourth exemplary embodiment, only the frame of the mask is superimposed on the mask-set image 73. The method for applying the transparency to the mask to be superimposed a frame line thereof, and the color thereof, however, are not limited. For example, the imaging control unit 101 may superimpose only a solid frame, superimpose the frame with a color that is the same as the color set for the mask, or superimpose a semitransparent mask. Fig. 17 is a diagram illustrating an example of the mask list screen. A mask list screen 300 of Fig. 17 is displayed on the display unit 23 of the client apparatus 20. When the user operates the input unit 24 of the client apparatus 20 to request the mask list screen 300, the client apparatus 20 transmits the mask acquisition command to the monitoring camera 10. The client apparatus 20 acquires the mask-set image 73 from the monitoring camera 10 as a response, and displays the mask-set image 73 in a mask list display region 301.

As described above, in the fourth exemplary embodiment, only the frame of the mask is superimposed on the mask-set image 73.

In such a manner, the user can easily check the position of the set mask and also check the current captured image under the mask.

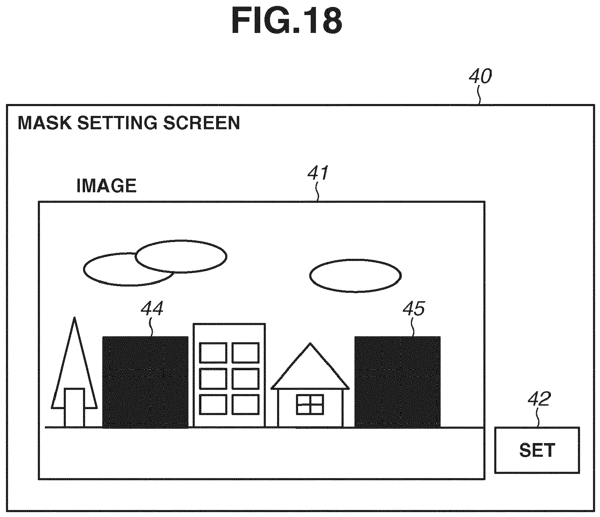

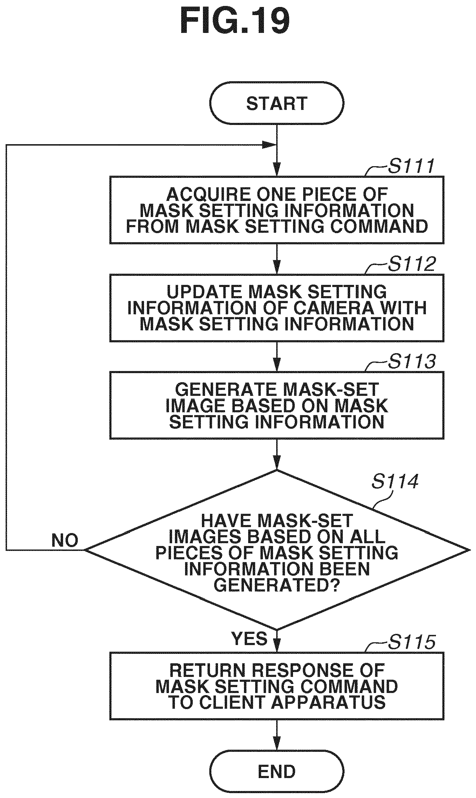

A fifth exemplary embodiment will be described below in detail. The mask-set image generation processing when the monitoring camera 10 receives a mask setting command including a plurality of mask settings is described with reference to Figs. 18 and 19.

Fig. 18 is a diagram illustrating an example of a mask setting screen according to a fifth exemplary embodiment. The mask setting screen of Fig. 18 is displayed on the display unit 23 of the client apparatus 20. The number of set masks is one in Fig. 8, whereas the number of set masks is two in Fig. 18.

The user operates the input unit 24 of the client apparatus 20, draws a square shape or a polygonal shape in the mask setting preview screen 41, thereby setting a mask 44 and a mask 45. When the user selects the mask setting button 42 after the masks are set, the control unit 200 of the client apparatus 20 transmits the mask setting command to the monitoring camera 10.

Fig. 19 is a flowchart illustrating an example of the mask setting command processing 30 according to the fifth exemplary embodiment.

In step Sill, the control unit 100 acquires mask setting information about the mask 44 that is first mask setting information, from the mask setting command transmitted from the client apparatus 20. The processing then proceeds to step S112.

In step S112, the control unit 100 updates the corresponding mask setting information held by the memory 12, with the mask setting information about the mask 44. The processing then proceeds to step S113.

In step S113, the control unit 100 generates the mask-set image based on the mask setting information about the mask 44. The processing then proceeds to step S114.

In step S114, the control unit 100 determines whether the mask-set images based on all pieces of the mask setting information transmitted from the client apparatus 20 have been generated. The processing proceeds to step Sill because a mask-set image with the mask 45 has not been generated yet.

In step Sill, the control unit 100 acquires mask setting information about the mask 45 that is second mask setting information, from the mask setting command transmitted from the client apparatus 20.

In step S112, the control unit 100 updates the mask setting information held by the memory 12, with the mask setting information about the mask 45. The processing then proceeds to step S113.

In step S113, the control unit 100 generates the mask-set image based on the mask setting information about the mask 45. The processing then proceeds to step S114.

In step S114, the control unit 100 determines whether the mask-set images based on all pieces of the mask setting information transmitted from the client apparatus 20 have been generated. The processing proceeds to step S115 because all of the mask-set images have been generated.

In step S115, the control unit 100 generates a response to the mask setting command, and transmits, to the client apparatus 20, the response to the mask setting command.

The control unit 100 generates the mask-set image that allows the user to easily check settings having been set when the mask setting command including the plurality of mask settings is received, and transmits the mask-set image to the user when the mask acquisition command is received.

In such a manner, the user can easily check the information about the mask to be set.

According to the first exemplary embodiment, the control unit 100 of the monitoring camera 10 returns the mask-set image 73 to the client apparatus 20 as the response to the mask acquisition command. Alternatively, the control unit 100 may transmit a uniform resource locator (URL) of the storage for the mask-set image to the client apparatus 20, in place of the mask-set image 73. The URL of the storage for the mask-set image is an example of the information indicating the specified mask-set image. In addition, the processing other than the processing performed by the imaging unit 13 may be executed by the client apparatus 20. In such a case, the instruction for pan-tilt control and the imaging instruction are performed through transmission of the commands from the client apparatus 20.

The present invention may be realized in such a manner that a program realizing one or more functions of the above-described exemplary embodiments is supplied to a system or an apparatus through a network or a storage medium, and one or more processors in a computer of the system or the apparatus read and execute the program. Further, the present invention may be realized by a circuit (e.g., application specific integrated circuit (ASIC)) that realizes one or more functions.

Hereinbefore, the exemplary embodiments of the present invention have been described in detail; however, the present invention is not limited to such specific exemplary embodiments.

The above-described hardware configuration of the monitoring camera 10 is merely an example, and the monitoring camera 10 may include, for example, a plurality of CPUs, a plurality of memories, and a plurality of communication units. In addition, a plurality of CPUs may execute processing with use of data, etc. held by a plurality of memories, based on programs. Moreover, a graphics processing unit (GPU) may be used in place of the CPU.

The processing of the above-described exemplary embodiments enables a user to easily check a region set with respect to the image captured by the monitoring camera 10.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments.

## Claims

1. An information processing apparatus, comprising:
a display means;
a transmission means (25) arranged to transmit, to an imaging apparatus (10), a mask setting command including mask setting information, the mask setting information indicating a position of a mask selected to prevent at least a part of a region in a captured image, captured by the imaging apparatus (10), from being viewed;
a reception means (25) arranged to receive an image containing said mask, in which the position of the mask is specified, generated based on the mask setting information; and
a display control means (200) arranged to display the image containing said mask received by the reception means on the display means (25).

2. The information processing apparatus according to claim 1, wherein the image containing said mask is an image having been subjected to processing for positioning a set mask to be set based on the mask setting information near a center of the screen on which the image is displayed.

3. The information processing apparatus according to claim 1, wherein the image containing said mask is an image zoomed in such a manner that a ratio of a set mask to be set based on the mask setting information is a ratio of the size of the mask to the size of a screen on which the image is displayed set to the image containing said mask.

4. The information processing apparatus according to claim 1, wherein the image containing said mask is an image in which an image indicating the set mask is superimposed on the captured image.

5. The information processing apparatus according to claim 1, wherein, in a case where the mask setting command includes a plurality of pieces of mask setting information, the transmission means (25) is arranged to transmit the plurality of pieces of mask setting information included in the mask setting command, and the display control means (200) is arranged to display the image containing said mask including a plurality of masks generated based on the respective pieces of setting information.

6. An information processing method, comprising:
transmitting, to an imaging apparatus (10), a mask setting command including mask setting information, the mask setting information indicating a position of a mask selected to prevent at least a part of a region in a captured image, captured by the imaging apparatus (10), from being viewed;
receiving an image containing said mask generated based on the mask setting information; and
displaying the received image containing said mask.

7. A computer program that, when executed by an information processing apparatus, causes the information processing apparatus to perform a method according to claim 6.
